(19) **Europäisches Patentamt / European Patent Office / Office européen des brevets**

(11) **EP 4 268 342 B1**

(12) **FASCICULE DE BREVET EUROPEEN**

(45) Date de publication et mention de la délivrance du brevet:
**13.08.2025 Bulletin 2025/33**

(21) Numéro de dépôt: **21845037.7**

(22) Date de dépôt: **23.12.2021**

(51) Classification Internationale des Brevets (IPC):
**G06N 3/088** (2023.01)  **H02J 3/32** (2006.01)
**H02J 3/38** (2006.01)  **H02J 3/46** (2006.01)

(52) Classification Coopérative des Brevets (CPC):
**H02J 3/38; G06N 3/088; H02J 3/32; H02J 3/46;**
H02J 2203/10

(86) Numéro de dépôt international:
**PCT/EP2021/087590**

(87) Numéro de publication internationale:
**WO 2022/136680 (30.06.2022 Gazette 2022/26)**

(54) **PROCÉDÉ DE CONTRÔLE D'UN MICRO-RÉSEAU ÉLECTRIQUE**

VERFAHREN ZUR ÜBERWACHUNG EINES ELEKTRISCHEN MIKRONETZWERKS

METHOD FOR CONTROLLING AN ELECTRICAL MICROGRID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2020 FR 2014141**

(43) Date de publication de la demande:
**01.11.2023 Bulletin 2023/44**

(73) Titulaires:
- **TOTALENERGIES ONETECH**
  **92400 Courbevoie (FR)**
- **Ecole Polytechnique**
  **91120 Palaiseau (FR)**
- **Centre National de la Recherche Scientifique**
  **75016 Paris (FR)**
- **Université de Lille**
  **59800 Lille (FR)**

(72) Inventeurs:
- **HENRI, Gonzague**
  **Oakland (US)**
- **CORDIER, Philippe**
  **75018 Paris (FR)**
- **LEVENT, Tanguy**
  **75009 Paris (FR)**
- **PREUX, Philippe**
  **59493 Villeneuve d'Ascq (FR)**
- **BONNASSIEUX, Yves**
  **75013 Paris (FR)**

(74) Mandataire: **Lavoix**
**2, place d'Estienne d'Orves**
**75441 Paris Cedex 09 (FR)**

(56) Documents cités:
**EP-A1- 3 654 482**  **CN-A- 110 232 476**
**CN-A- 112 117 760**  **US-A1- 2017 194 814**
**US-A1- 2020 144 824**

- **MIHET-POPA LUCIAN ET AL: "An Efficient Scheme for Determining the Power Loss in Wind-PV Based on Deep Learning", IEEE ACCESS, IEEE, USA, vol. 9, 22 December 2020 (2020-12-22), pages 9481 - 9492, XP011833165, DOI: 10.1109/ACCESS.2020.3046687**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de contrôle d'un micro-réseau électrique. La présente invention concerne aussi un produit programme d'ordinateur associé.

L'un des défis de notre siècle est de réduire les émissions de gaz à effet de serre. Pour faire face à ce défi, de nombreux investissements concernent le développement d'énergies renouvelables et de ressources énergétiques distribuées (DER). Les sources d'énergie renouvelables, telles que les sources d'énergie solaire et éolienne, présentant un caractère stochastique, les infrastructures des réseaux électriques sont à adapter afin de maintenir la fiabilité et la stabilité du réseau électrique.

A cet effet, des micro-réseaux (en anglais « microgrid ») permettant l'intégration de sources d'énergie renouvelables dans les réseaux électriques ont été développés. Un micro-réseau est un réseau d'alimentation qui comprend des sources d'énergie renouvelables (éoliennes ou panneaux photovoltaïques), des sources traditionnelles d'énergie fossile (générateur diesel), des dispositifs de stockage d'énergie (batteries), des charges consommatrices d'énergie et un système de gestion d'énergie. Un micro-réseau fonctionne soit connecté au réseau principal, soit déconnecté de celui-ci en mode isolé. Un micro-réseau est également adapté pour être complément déconnecté du réseau principal (hors réseau).

L'un des éléments permettant le fonctionnement d'un micro-réseau est le système de gestion d'énergie du micro-réseau.

Il est notamment connu des systèmes de gestion d'énergie basés sur un module de prévision sur les prochaines heures de la puissance produite par les sources d'énergie renouvelables (panneaux photovoltaïques) et de la consommation des charges. Les différentes unités du réseau sont alors gérées selon une méthode d'optimisation utilisant les prévisions de ce module.

Cependant, un tel module de prévision n'est pas adapté pour faire face à des conditions changeantes et imprévues. Il est, en outre, complexe à mettre en oeuvre.

D'autres systèmes de gestion d'énergie basés sur l'entraînement de modèles (en anglais « machine learning ») ont également été développés. De tels systèmes permettent le contrôle de micro-réseaux pour lesquels ils ont été entraînés.

Néanmoins, l'entraînement de tels modèles est chronophage et mobilise des ressources, ce qui rend cette solution complexe à déployer à grande échelle.

Encore d'autres moyens de gestion de micro-réseaux sont présentés dans les documents US 2017/194814 A et CN 112 117 760 A. L'article M. Rawa et al., "An Efficient Scheme for Determining the Power Loss in Wind-PV Based on Deep Learning," in IEEE Access, vol. 9, pp. 9481-9492, 2021, doi: 10.1109/ACCESS.2020.3046687 décrit quant à lui un procédé utilisant l'apprentissage profond pour déterminer des pertes de puissance dans des systèmes d'énergie éolien et solaire.

Il existe donc un besoin pour un outil permettant de faciliter le contrôle de micro-réseaux différents, tout en s'affranchissant d'un module de prévision.

A cet effet, la présente description a pour objet un procédé de contrôle d'au moins un micro-réseau électrique, chaque micro-réseau électrique comprenant au moins un organe de consommation d'énergie électrique, au moins un organe de production d'énergie électrique et au moins un organe de stockage d'énergie électrique, chaque micro-réseau étant propre à prendre une pluralité d'états énergétiques, chaque état énergétique étant défini par une quantité d'énergie électrique à échanger entre des organes du micro-réseau et par une quantité d'énergie électrique stockée sur le au moins un organe de stockage d'énergie électrique, chaque micro-réseau étant propre à passer d'un état à un autre par la mise en oeuvre d'une action sur le micro-réseau parmi un ensemble d'actions prédéfinies, le procédé comprenant les phase de :

a. fourniture d'un modèle, dit modèle source, entraîné sur un domaine source pour apprendre un ensemble source de tâches, de sorte que le modèle source est propre à déterminer une action, parmi l'ensemble d'actions prédéfinies, de contrôle d'un micro-réseau donné, dit micro-réseau source , en fonction de l'état du micro-réseau source, le micro-réseau source étant propre à fonctionner dans un environnement donné, dit environnement source, délimitant le domaine source, le micro-réseau source étant propre à fonctionner selon un mode de fonctionnement donné, dit mode de fonctionnement source, délimitant l'ensemble source de tâches, le modèle source comprenant des paramètres dont les valeurs sont optimisées pour le domaine source et l'ensemble source de tâches,

b. fourniture d'un modèle, dit modèle cible, propre à être entraîné sur un domaine cible pour apprendre un ensemble cible de tâches, de sorte que le modèle cible soit propre à déterminer une action, parmi l'ensemble d'actions prédéfinies, de contrôle d'un micro-réseau donné, dit micro-réseau cible, en fonction de l'état du micro-réseau cible, le micro-réseau cible étant propre à fonctionner dans un environnement donné, dit environnement cible, délimitant le domaine cible, le micro-réseau cible étant propre à fonctionner selon un mode de fonctionnement donné, dit mode de fonctionnement cible, délimitant l'ensemble cible de tâches, l'environnement cible et le mode de fonctionnement cible étant tels que le domaine cible est différent du domaine source et/ou que l'ensemble cible de tâches est différent de l'ensemble source de tâches, le modèle cible comprenant des paramètres,

c. extraction de valeurs de paramètres du modèle source, la phase d'extraction étant mise en oeuvre par ordinateur,

d. initialisation de paramètres du modèle cible avec les valeurs de paramètres extraites du modèle source pour obtenir un modèle cible initialisé, la phase d'initialisation étant mise en oeuvre par ordinateur, et

e. optimisation, en fonction du domaine cible et de l'ensemble cible de tâches , des paramètres du modèle cible initialisé pour obtenir un modèle cible entraîné pour le contrôle du micro-réseau cible, la phase d'optimisation étant mise en oeuvre par ordinateur.

Suivant des modes de réalisation particuliers, le procédé comprend une ou plusieurs des caractéristiques suivantes, prise(s) isolément ou suivant toutes les combinaisons techniquement possibles :

- au moins une valeur de paramètres du modèle cible qui a été initialisée avec les valeurs extraites est figée lors de l'étape d'optimisation ;
- chaque modèle est un réseau de neurones comprenant une couche de neurones d'entrée une couche de neurones de sortie et des couches intermédiaires de neurones, les paramètres de chaque modèle définissant les poids synaptiques entre les neurones de couches consécutives, les valeurs de paramètres, extraites du modèle source, correspondant au moins aux poids synaptiques entre les neurones de la couche d'entrée et les neurones de la couche intermédiaire consécutive à la couche d'entrée, dite première couche intermédiaire, et, de préférence, en outre, les poids synaptiques entre les neurones de plusieurs couches intermédiaires de neurones, consécutives à la première couche intermédiaire de neurones ;
- la phase d'optimisation comprend :

  a. une étape de génération de jeux de données d'apprentissage en fonction du domaine cible et de l'ensemble cible de tâches,

  b. une étape d'entraînement du modèle cible au cours de laquelle au moins un paramètre du modèle cible est optimisé sur la base d'au moins un jeu d'apprentissage généré pour obtenir un modèle cible optimisé, et

  c. la répétition des étapes de génération et d'entraînement jusqu'à la satisfaction d'un critère de convergence, le modèle cible optimisé lors de la dernière itération étant un modèle cible entraîné pour le contrôle du micro-réseau cible.

- le procédé comprend :

  a. une phase d'exploitation du modèle cible entraîné comprenant la détermination d'une action de contrôle du micro-réseau cible suite à la réception, par le modèle cible entraîné, de l'état courant du micro-réseau cible, et

  b. une phase de réalisation de l'action déterminée par l'envoi de commandes aux organes du micro-réseau cible.

- les modes de fonctionnement prédéfinis comprennent au moins les modes de fonctionnement suivants :

  a. un mode de fonctionnement, dit isolé, dans lequel le micro-réseau est déconnecté du réseau de distribution d'énergie électrique,

  b. un mode de fonctionnement, dit connecté, dans lequel le micro-réseau est connecté à un réseau de distribution d'énergie électrique, et

  c. un mode de fonctionnement, dit intermédiaire, dans lequel le micro-réseau est connecté à un réseau de distribution d'énergie électrique ou isolé du réseau de distribution d'énergie électrique en fonction du pas de temps considéré.

- chaque micro-réseau comprend au moins un organe de production d'énergie renouvelable et au moins un organe de production d'énergie fossile, la quantité d'énergie électrique à échanger étant la différence entre la quantité d'énergie électrique produite par le au moins un organe de production d'énergie renouvelable et la quantité d'énergie électrique demandée par le au moins un organe de consommation d'énergie électrique, la quantité d'énergie électrique à échanger étant une quantité d'énergie électrique à échanger entre les organes du micro-réseau à l'exception de l'au moins un organe de production d'énergie renouvelable ;
- pour deux micro-réseaux fonctionnant dans des environnements distincts :

  a. la distribution de la quantité d'énergie électrique produite par le au moins un organe de production d'énergie renouvelable de l'un des micro-réseaux sur une période prédéterminée est différente de la distribution de la quantité d'énergie électrique produite par le au moins un organe de production d'énergie renouvelable de l'autre micro-réseau sur la période prédéterminée, et/ou

b. la distribution de la quantité d'énergie électrique demandée par le au moins un organe de consommation d'énergie électrique de l'un des micro-réseaux sur une période prédéterminée est différente de la distribution de la quantité d'énergie électrique demandée par le au moins un organe de consommation d'énergie électrique de l'autre micro-réseau sur la période prédéterminée ;

- l'ensemble d'actions prédéfinies comprend au moins une action suivante :

a. la décharge de l'au moins un organe de stockage d'énergie électrique d'une valeur correspondant à la quantité d'énergie électrique à échanger, ou lorsque la quantité d'énergie électrique stockée sur le au moins un organe de stockage d'énergie électrique est insuffisante par rapport à la quantité d'énergie électrique à échanger, la décharge intégrale de l'au moins un organe de stockage d'énergie électrique et la fourniture de la quantité d'énergie électrique restante par le au moins un organe de production d'énergie électrique,
b. la charge de l'au moins un organe de stockage d'énergie électrique d'une valeur correspondant à la quantité d'énergie électrique à échanger,
c. la production d'une quantité d'énergie électrique correspondant à la quantité d'énergie électrique à échanger par le au moins un organe de production d'énergie électrique,
d. l'importation d'énergie électrique en provenance d'un réseau de distribution d'énergie électrique pour fournir au moins une partie de la quantité d'énergie électrique à échanger,
e. l'exportation d'au moins une partie de la quantité d'énergie électrique à échanger vers un réseau de distribution d'énergie électrique,
f. l'importation de la quantité d'énergie électrique à échanger d'un réseau de distribution d'énergie électrique et d'une quantité d'énergie électrique pour charger l'organe de stockage d'énergie électrique, et
g. ne pas faire d'action.

La présente description se rapporte également à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé tel que précédemment décrit lorsque le programme d'ordinateur est mis en œuvre sur l'unité de traitement des données.

La présente description concerne aussi un support lisible d'informations sur lequel est mémorisé un produit programme d'ordinateur tel que précédemment décrit.

D'autres caractéristiques et avantages de l'invention apparaîtront à la lecture de la description qui suit de modes de réalisation de l'invention, donnés à titre d'exemple uniquement et en référence aux dessins qui sont :

La figure 1, une vue schématique d'un exemple d'un micro-réseau,
La figure 2, une vue schématique d'un exemple d'ordinateur permettant la mise en œuvre d'un procédé de contrôle d'un micro-réseau,
La figure 3, un organigramme d'un exemple de mise en œuvre d'un procédé de contrôle d'un micro-réseau,
La figure 4, une représentation schématique d'un exemple illustrant différentes couches de neurones d'un réseau de neurones,
La figure 5, une représentation schématique d'un exemple illustrant l'extraction des valeurs de paramètres d'un modèle source pour l'initialisation de paramètres d'un modèle cible, et
La figure 6, une représentation schématique illustrant la mise en œuvre d'une phase d'optimisation des paramètres d'un modèle cible.

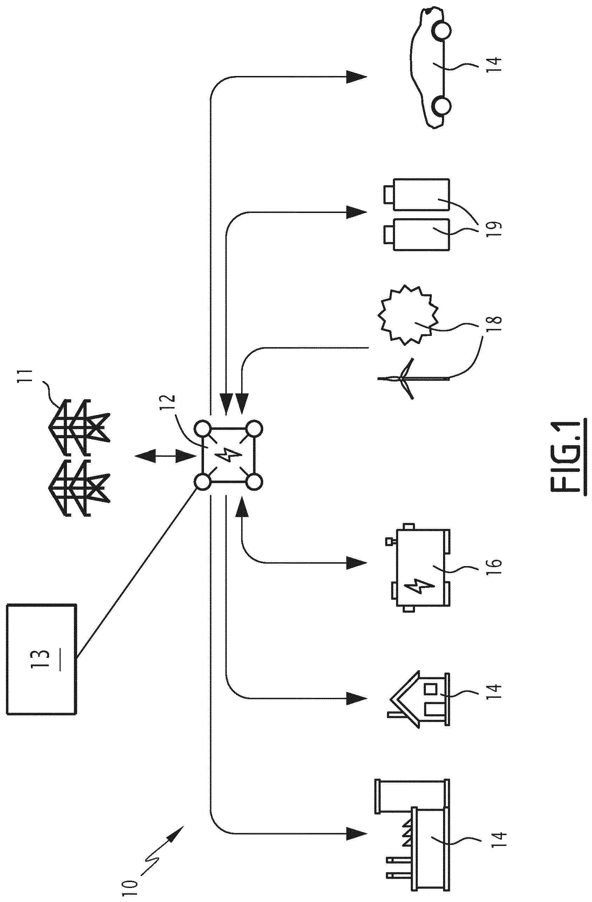

Un exemple d'un micro-réseau 10 est illustré par la figure 1. Dans cet exemple, le micro-réseau 10 est connectable à un réseau électrique principal 11. Le micro-réseau 10 comprend un réseau de transport d'énergie électrique 12, des organes propres à être connectés au réseau de transport d'énergie électrique 12 et un outil 13 de contrôle du micro-réseau 10. Les organes du micro-réseau 10 comprennent au moins un organe de consommation d'énergie électrique 14, au moins un organe de production d'énergie fossile 16, au moins un organe de production d'énergie renouvelable 18 et au moins un organe de stockage d'énergie électrique 19.

Le micro-réseau 10 est propre à prendre une pluralité d'états énergétiques St. Chaque état énergétique St est défini par une quantité d'énergie électrique à échanger $P_{Net}$ entre des organes du micro-réseau 10 et par une quantité d'énergie électrique stockée $E_{Bcap}$ sur le au moins un organe de stockage d'énergie électrique 19.

Par exemple, la quantité d'énergie électrique à échanger $P_{Net}$ est la différence entre la quantité d'énergie électrique produite $P_{PV}$ par le au moins un organe de production d'énergie renouvelable 18 et la quantité d'énergie électrique demandée $P_C$ par le au moins un organe de consommation d'énergie électrique 14. La quantité d'énergie électrique à échanger $P_{Net}$ est, dans ce cas, une quantité d'énergie électrique à échanger entre les organes du micro-réseau 10 à l'exception de l'au moins un organe de production d'énergie renouvelable 18.

Le micro-réseau 10 est propre à passer d'un état St à un autre par la mise en oeuvre d'une action At sur le micro-réseau 10 parmi un ensemble $E_A$ d'actions prédéfinies.

Par exemple, l'ensemble $E_A$ d'actions prédéfinies comprend au moins une action suivante :

- $A_1$ : la décharge de l'au moins un organe de stockage d'énergie électrique 19 d'une valeur correspondant à la quantité d'énergie électrique à échanger $P_{Net}$, ou lorsque la quantité d'énergie électrique stockée $E_{Bcap}$ sur le au moins un organe de stockage d'énergie électrique 19 est insuffisante par rapport à la quantité d'énergie électrique à échanger $P_{Net}$, la décharge intégrale de l'au moins un organe de stockage d'énergie électrique 19 et la fourniture de la quantité d'énergie électrique restante par le au moins un organe de production d'énergie électrique 16,
- $A_2$ : la charge de l'au moins un organe de stockage d'énergie électrique 19 d'une valeur correspondant à la quantité d'énergie électrique à échanger $P_{Net}$,
- $A_3$ : la production d'une quantité d'énergie électrique correspondant à la quantité d'énergie électrique à échanger $P_{Net}$ par le au moins un organe de production d'énergie électrique 16,
- $A_4$ : l'importation d'énergie électrique en provenance d'un réseau de distribution d'énergie électrique pour fournir au moins une partie de la quantité d'énergie électrique à échanger $P_{Net}$,
- $A_5$ : l'exportation d'au moins une partie de la quantité d'énergie électrique à échanger $P_{Net}$ vers un réseau de distribution d'énergie électrique,
- $A_6$ : l'importation de la quantité d'énergie électrique à échanger $P_{Net}$ d'un réseau de distribution d'énergie électrique, ainsi que d'une quantité d'énergie électrique (par exemple comprise au sens large entre 10 pourcents et 20 pourcents) pour charger l'organe de stockage d'énergie électrique, et
- $A_7$ : ne pas faire d'action.

Le micro-réseau 10 est propre à fonctionner dans un environnement donné, parmi un ensemble d'environnements prédéfinis. L'environnement est, par exemple, une zone géographique donnée.

L'environnement influe notamment sur la quantité d'énergie électrique à échanger $P_{Net}$. Par exemple, l'environnement influe sur au moins l'une de la quantité d'énergie électrique produite $P_{PV}$ par le au moins un organe de production d'énergie renouvelable 18 et de la quantité d'énergie électrique demandée $P_C$ par le au moins un organe de consommation d'énergie électrique 14.

Un environnement prédéfini désigne, par exemple, un ensemble d'environnements ayant des profils similaires en termes de quantité d'énergie électrique produite $P_{PV}$ par le au moins un organe de production d'énergie renouvelable 18 et de quantité d'énergie électrique demandée $P_C$ par le au moins un organe de consommation d'énergie électrique 14.

Par exemple, pour deux micro-réseaux 10 fonctionnant dans des environnements distincts :

- la distribution de la quantité d'énergie électrique produite $P_{PV}$ par le au moins un organe de production d'énergie renouvelable 18 de l'un des micro-réseaux 10 sur une période prédéterminée (exemple : un an) est différente de la distribution de la quantité d'énergie électrique produite $P_{PV}$ par le au moins un organe de production d'énergie renouvelable 18 de l'autre micro-réseau 10 sur la période prédéterminée, et/ou
- la distribution de la quantité d'énergie électrique demandée $P_C$ par le au moins un organe de consommation d'énergie électrique 14 de l'un des micro-réseaux 10 sur une période prédéterminée (exemple : un an) est différente de la distribution de la quantité d'énergie électrique demandée $P_C$ par le au moins un organe de consommation d'énergie électrique 14 de l'autre micro-réseau 10 sur la période prédéterminée.

Le micro-réseau 10 est propre à fonctionner selon un mode de fonctionnement donné, parmi un ensemble de modes de fonctionnement prédéfinis. Le mode de fonctionnement est avantageusement relatif à la connexion ou non du micro-réseau 10 à un réseau de distribution d'énergie électrique (réseau électrique principal). Le mode de fonctionnement d'un micro-réseau 10 définit notamment les actions At propres à être mises oeuvre sur le micro-réseau 10 parmi l'ensemble $E_A$ des actions prédéfinies.

Avantageusement, les modes de fonctionnement prédéfinis comprennent au moins l'un des modes de fonctionnement suivants, de préférence les trois modes de fonctionnement suivants :

- un mode de fonctionnement, dit isolé, dans lequel le micro-réseau 10 est déconnecté d'un réseau de distribution d'énergie électrique (hors réseau),
- un mode de fonctionnement, dit connecté, dans lequel le micro-réseau 10 est connecté à un réseau de distribution d'énergie électrique (le micro-réseau 10 est ainsi propre à échanger de l'énergie électrique avec le réseau de distribution d'énergie électrique), et
- un mode de fonctionnement, dit intermédiaire, dans lequel le micro-réseau 10 est connecté ou isolé d'un réseau de distribution d'énergie électrique en fonction du pas de temps considéré (cas par exemple des environnements pour lesquels la connexion au réseau de distribution d'énergie électrique est instable ou lorsque les opérateurs du réseau de distribution d'énergie électrique décident de ne pas avoir d'interaction avec tel ou tel micro-réseau pour des raisons de stabilité globale du réseau de distribution d'énergie électrique).

Notamment, pour le mode isolé ou le mode intermédiaire fonctionnant en isolé, les actions $A_4$, $A_5$ et $A_6$ ne sont pas possibles car le micro-réseau 10 n'est pas connecté à un réseau de distribution d'énergie électrique. Par contre, pour le mode connecté ou le mode intermédiaire fonctionnant en connecté, l'ensemble des actions $A_1$ à $A_7$ est possible.

Le réseau de transport d'énergie électrique 12 est configuré, d'une part, pour recevoir l'énergie électrique produite ou stockée par les organes connectés audit réseau de transport d'énergie électrique 12 et pour distribuer l'énergie électrique reçue aux organes connectés audit réseau de transport d'énergie électrique 12.

La connexion entre chaque organe et le réseau de transport d'énergie électrique 12 est, par exemple, établie par un protocole « machine to machine » (de l'anglais « communication de machine à machine »).

Chaque organe du micro-réseau 10 est propre à être connecté ou déconnecté du réseau de transport d'énergie électrique 12.

Un organe 14 de consommation d'énergie électrique est un organe propre à consommer de l'énergie électrique. Un organe 14 de consommation d'énergie électrique est, par exemple, un réseau électrique d'éclairage ou de chauffage d'un bâtiment commercial ou résidentiel, un véhicule électrique, ou encore un équipement opérationnel.

Un organe 16 de production d'énergie fossile est un organe propre à produire une énergie fossile. Une énergie fossile est produite à partir de la décomposition sédimentaire de matières organiques, c'est-à-dire composées principalement de carbone. Un organe 16 de production d'énergie fossile utilise notamment des ressources primaires telles que le pétrole, le gaz naturel ou le charbon. Un organe 16 de production d'énergie fossile est, par exemple, une centrale au charbon, une centrale au fioul, une centrale thermique au gaz ou un générateur diesel.

Un organe de 18 de production d'énergie renouvelable est un organe propre à produire une énergie renouvelable. Une énergie renouvelable est une source d'énergie provenant de phénomènes naturels cycliques ou constants induits par exemple par les astres : le soleil essentiellement pour la chaleur et la lumière qu'il génère, mais aussi l'attraction de la lune (marées) et la chaleur générée par la Terre (géothermie). Un organe 18 de production d'énergie renouvelable est, par exemple, un barrage hydroélectrique, une centrale hydroélectrique, un ensemble d'éoliennes ou encore un ensemble de panneaux solaires.

Un organe 19 de stockage d'énergie électrique est un organe propre à stocker de l'énergie électrique. Un organe 19 de stockage d'énergie électrique est, par exemple, un accumulateur d'énergie électrique tel qu'une batterie. Un organe 19 de stockage d'énergie électrique fonctionne comme un producteur d'énergie électrique lors de sa décharge et comme un consommateur d'énergie électrique lors de sa charge.

L'outil 13 est configuré pour contrôler les quantités d'énergie électrique échangées entre les organes du micro-réseau 10.

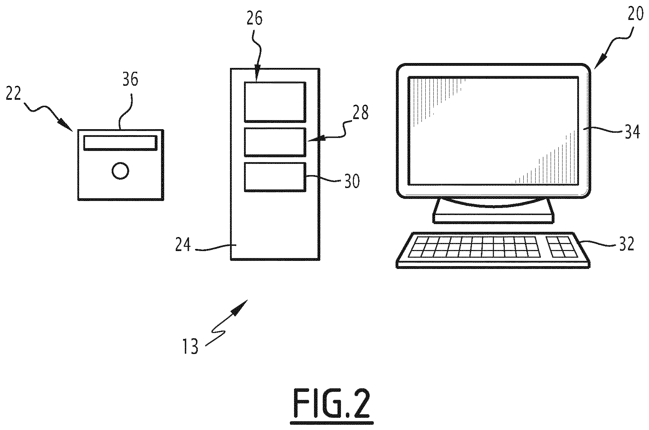

Dans l'exemple illustré par la figure 2, l'outil 13 comprend un calculateur 20 et un produit programme d'ordinateur 22.

Le calculateur 20, est de préférence, un ordinateur.

Plus généralement, le calculateur 20 est un calculateur électronique propre à manipuler et/ou transformer des données représentées comme des quantités électroniques ou physiques dans des registres de calculateur 10 et/ou des mémoires en d'autres données similaires correspondant à des données physiques dans des mémoires, des registres ou d'autres types de dispositifs d'affichage, de transmission ou de mémorisation.

Le calculateur 20 est en interaction avec le produit programme d'ordinateur 22.

Comme illustré par la figure 2, le calculateur 20 comporte un processeur 24 comprenant une unité de traitement de données 26, des mémoires 28 et un lecteur 30 de support d'informations. Dans l'exemple illustré par la figure 2, le calculateur 20 comprend une interface homme-machine 32, tel qu'un écran, et un afficheur 34.

Le produit programme d'ordinateur 22 comporte un support d'informations 36.

Le support d'information 36 est un support lisible par le calculateur 20, usuellement par l'unité de traitement de données 26. Le support lisible d'informations 36 est un médium adapté à mémoriser des instructions électroniques et capable d'être couplé à un bus d'un système informatique.

A titre d'exemple, le support d'informations 36 est une clé USB, une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'informations 36 est mémorisé le programme d'ordinateur 12 comprenant des instructions de programme.

Le programme d'ordinateur 22 est chargeable sur l'unité de traitement de données 26 et est adapté pour entraîner la mise en oeuvre d'un procédé de contrôle du micro-réseau 10 lorsque le programme d'ordinateur 22 est mis en oeuvre sur l'unité de traitement 26 du calculateur 20. Un tel procédé de contrôle sera décrit dans la suite de la description.

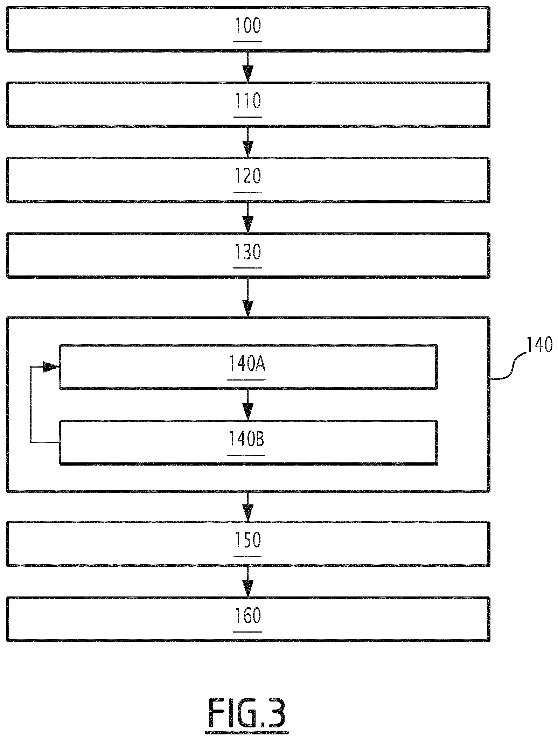

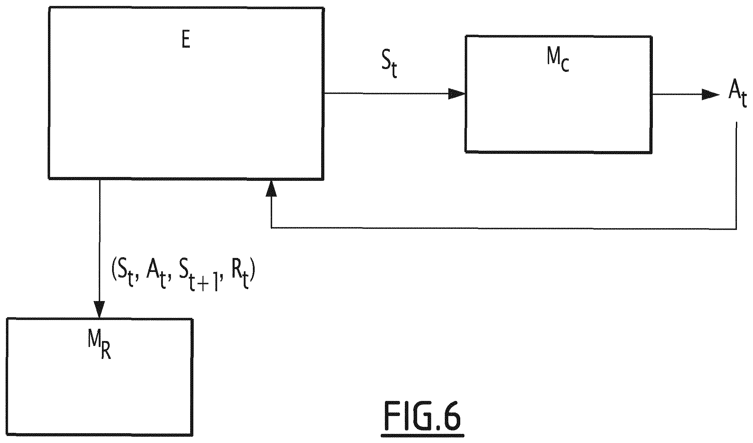

Le fonctionnement de l'outil de contrôle 13, c'est-à-dire du calculateur 20 en interaction avec le produit programme d'ordinateur 22 va maintenant être décrit en référence aux figures 3 et 6, qui illustrent schématiquement un exemple de mise en oeuvre d'un procédé de contrôle d'un micro-réseau 10.

Le procédé de contrôle comprend une phase 100 de fourniture d'un modèle, dit modèle source $M_S$, entraîné sur un domaine source $D_S$ pour apprendre un ensemble source de tâches Ts visant au contrôle d'un micro-réseau donné, dit micro-réseau source 10S. Le terme « domaine » désigne un espace de caractéristiques d'entrée et une distribution de probabilité marginale. Le terme « ensemble de tâches » désigne un espace de caractéristiques de sortie et une fonction de prédiction objective.

En particulier, le modèle source $M_S$ a été entraîné de sorte à déterminer une action, parmi l'ensemble $E_A$ d'actions prédéfinies (par exemple décrit précédemment), de contrôle du micro-réseau source 10S, en fonction de l'état St du micro-réseau source 10S.

Le micro-réseau source 10S est propre à fonctionner dans un environnement donné, dit environnement source $E_S$ et selon un mode de fonctionnement donné, dit mode de fonctionnement source $F_S$. L'environnement source $E_S$ délimite le domaine source $D_S$. Le mode de fonctionnement source $F_S$ délimite l'ensemble source de tâches $T_S$.

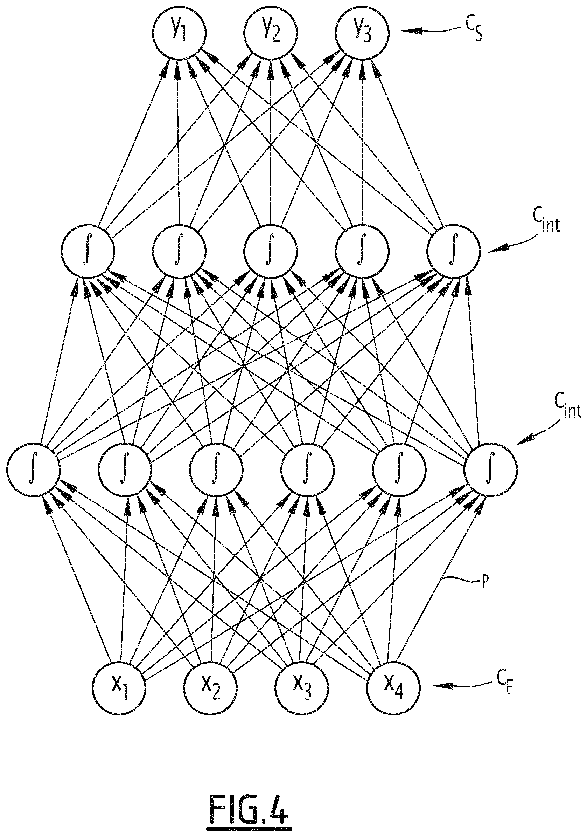

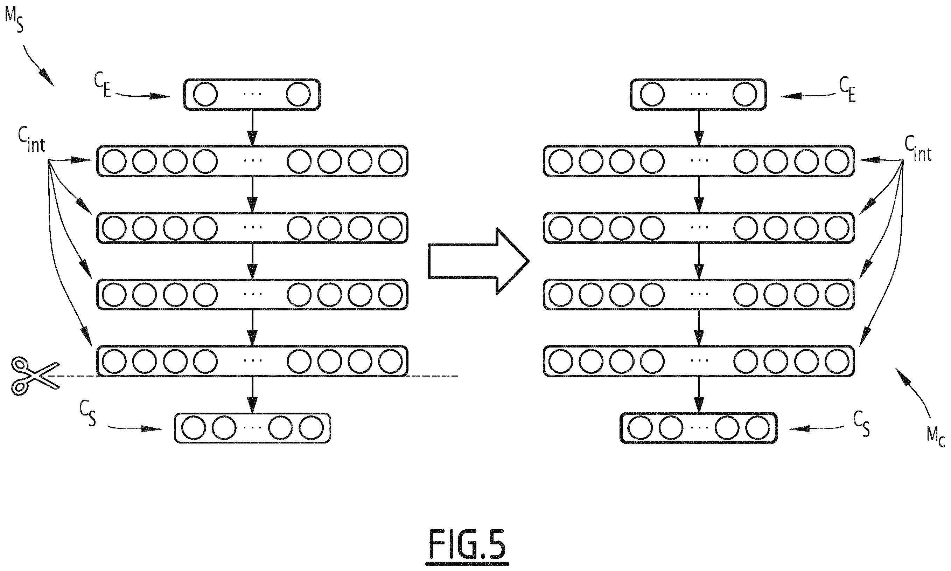

Le modèle source $M_S$ comprend notamment des paramètres w dont les valeurs sont optimisées pour le domaine source $D_S$ et l'ensemble source de tâches $T_S$. Dans un exemple, le modèle source $M_S$ est un réseau de neurones comprenant une couche de neurones d'entrée $C_E$, une couche de neurones de sortie $C_S$ et des couches intermédiaires de neurones $C_{int}$. Les paramètres w du modèle source $M_S$ définissent alors les poids synaptiques P entre les neurones de couches consécutives. Des exemples de réseaux de neurones sont illustrés par les figures 4 et 5.

Notamment, la figure 4 illustre un réseau de neurones comprenant une couche d'entrée $C_E$ à 4 neurones, deux couches intermédiaires $C_{int}$ à 6 et 5 neurones et une couche de sortie $C_S$ à 3 neurones. Les poids synaptiques P entre les neurones de chaque couche sont représentés par des flèches (seule une référence P est illustrée pour ne pas surcharger la figure). Dans cet exemple, chaque neurone d'une couche prend son entrée sur les neurones de la couche précédente pondérés par le poids synaptique P entre ledit neurone et chaque neurone de la couche précédente.

La figure 5 illustre schématiquement des réseaux de neurones ayant une couche d'entrée $C_E$, quatre couches intermédiaires $C_{int}$ et une couche de sortie $C_S$.

Le procédé de contrôle comprend une phase 110 de fourniture d'un modèle, dit modèle cible $M_C$, propre à être entraîné sur un domaine cible $D_C$ pour apprendre un ensemble cible de tâches $T_C$, visant au contrôle d'un micro-réseau donné, dit micro-réseau cible 10C.

En particulier, le modèle cible $M_C$ a été entraîné de sorte à déterminer une action At, parmi l'ensemble $E_A$ d'actions prédéfinies (par exemple décrit précédemment), de contrôle du micro-réseau cible 10C, en fonction de l'état St du micro-réseau cible 10C.

Le micro-réseau cible 10C est propre à fonctionner dans un environnement donné, dit environnement cible $E_C$ et selon un mode de fonctionnement donné, dit mode de fonctionnement cible $F_C$. L'environnement cible $E_C$ délimite le domaine cible $D_C$. Le mode de fonctionnement cible $F_C$ délimite l'ensemble cible de tâches $T_C$.

Le micro-réseau cible 10C diffère du micro-réseau source 10S par le fait que :

- l'environnement cible $E_C$ est différent de l'environnement source $E_S$, ce qui implique que le domaine cible $D_C$ est différent du domaine source $D_S$, et/ou
- le mode de fonctionnement cible $F_C$ est différent du mode de fonctionnement source $F_S$, ce qui implique que l'ensemble cible de tâches $T_C$ est différent de l'ensemble source de tâches $T_S$.

Le modèle cible $M_C$ comprend des paramètres w propres à être optimisés pour le domaine cible $D_C$ et l'ensemble cible de tâches $T_C$. Lorsque le modèle source $M_S$ est un réseau de neurones (voir exemple ci-dessus), le modèle cible $M_C$ est aussi un réseau de neurones comprenant une couche de neurones d'entrée $C_E$, une couche de neurones de sortie $C_S$ et des couches intermédiaires de neurones $C_{int}$. Les paramètres w du modèle cible $M_C$ définissent alors les poids synaptiques P entre les neurones de couches consécutives.

Le procédé de contrôle comprend une phase 120 d'extraction de valeurs de paramètres w du modèle source $M_S$. La phase d'extraction 120 est mise en oeuvre par le calculateur 20 en interaction avec le produit programme d'ordinateur 22, c'est-à-dire est mise en oeuvre par ordinateur.

Dans un mode de réalisation, les valeurs de paramètres w, extraites du modèle source $M_S$, définissent au moins les poids synaptiques P entre les neurones de la couche d'entrée $C_E$ et de la couche intermédiaire $C_{int}$ de neurones consécutive à la couche d'entrée $C_E$, dite première couche intermédiaire. De préférence, les valeurs de paramètres w, extraites du modèle source $M_S$, définissent aussi les poids synaptiques P entre les neurones de plusieurs couches intermédiaires $C_{int}$ de neurones, consécutives à la première couche intermédiaire. Dans l'exemple illustré par la figure 5, les valeurs extraites sont celles des paramètres w définissant les poids synaptiques P entre toutes les couches sauf entre la dernière couche intermédiaire $C_{int}$ et la couche de sortie $C_S$.

Le procédé de contrôle comprend une phase 130 d'initialisation de paramètres w du modèle cible $M_C$ avec les valeurs de paramètres w extraites du modèle source $M_S$ pour obtenir un modèle cible $M_C$ initialisé. La phase d'initialisation 130 est mise en œuvre par le calculateur 20 en interaction avec le produit programme d'ordinateur 22, c'est-à-dire est mise en œuvre par ordinateur.

Ainsi, lorsque les modèles $M_S$, $M_C$ sont des réseaux de neurones, les poids synaptiques P entre les neurones de couches du modèle cible $M_C$ sont initialisés avec les valeurs des poids synaptiques P correspondant auxdites couches dans le modèle source $M_s$. Dans l'exemple illustré par la figure 5, seuls les poids synaptiques P entre la dernière couche intermédiaire $C_{int}$ et la couche de sortie $C_S$ ne sont pas initialisés avec les valeurs extraites, et sont initialisés aléatoirement.

Dans un mode de réalisation, au moins un paramètre w du modèle cible $M_C$ qui a été initialisé avec une valeur extraite est figé (en anglais « freezed »). Dans une variante, cela s'applique à tous les paramètres w du modèle cible $M_C$ qui ont été initialisés avec des valeurs extraites. En d'autres termes, cela signifie que les valeurs de ces paramètres w ne sont pas modifiables ultérieurement, notamment lors de la phase d'optimisation décrite dans ce qui suit.

En variante, tous les paramètres w du modèle cible $M_C$, même ceux initialisés, sont modifiables lors de l'étape d'optimisation.

Le procédé de contrôle comprend une phase 140 d'optimisation, en fonction du domaine cible $D_C$ et de l'ensemble cible de tâches $T_C$, des paramètres w du modèle cible $M_C$ initialisé pour obtenir un modèle cible $M_C$ entraîné pour le contrôle du micro-réseau cible 10C. La phase d'optimisation 140 est mise en œuvre par le calculateur 20 en interaction avec le produit programme d'ordinateur 22, c'est-à-dire est mise en œuvre par ordinateur.

Dans un exemple, la phase d'optimisation 140 comprend des étapes 140A de génération de données d'apprentissage et des étapes 140B d'entraînement du modèle cible $M_C$ sur la base des données d'apprentissage générées. Les étapes de génération 140A et d'entraînement 140B sont répétées au cours d'itérations successives.

Au cours des étapes de génération 140A, un modèle à entraîner (agent) est en interaction avec un environnement selon le principe de l'apprentissage par renforcement profond (en anglais « Deep Reinforcement Learning »). Le modèle à entraîner est, par exemple, un réseau de neurones.

Notamment, comme illustré par la figure 6, le modèle à entraîner $M_C$ est propre à déterminer une action At en réponse à un état St généré par un module, appelé l'environnement E. L'action At générée par le modèle $M_C$ est propre à être traitée par l'environnement E. L'environnement E vérifie le respect d'un ensemble de contraintes lors de l'exécution de l'action At et génère l'état suivant $S_{t+1}$ résultant et une récompense Rt. Au moins les données relatives à l'état St, à l'action déterminée At, à l'état suivant $S_{t+1}$ et à la récompense Rt sont mémorisées dans une mémoire $M_R$, dite de reprise (en anglais « memory replay ») en vue d'être utilisées ultérieurement pour entraîner le modèle cible $M_C$.

La mémoire de reprise $M_R$ est typiquement initialisée au démarrage, c'est-à-dire lors du lancement de la toute première étape de génération 100. Une fois la capacité maximale de la mémoire de reprise $M_R$ atteinte, la mémoire de reprise $M_R$ fonctionne ensuite par exemple sur le modèle du premier entré, premier sorti (en anglais « First In First Out (FIFO) »).

Dans le cas d'espèce, l'environnement E a été configuré pour simuler le fonctionnement d'un micro-réseau cible 10C. La simulation a par exemple été réalisée sur le principe d'un processus de décision Markovien. Les interactions successives entre le modèle cible $M_C$ à entraîner et l'environnement E vont permettre d'obtenir un modèle cible $M_C$ entraîné pour le contrôle d'un micro-réseau cible 10C.

Un exemple de mise en oeuvre des différentes étapes de la phase de génération est donné dans ce qui suit.

L'étape 140A vise à générer un jeu de données d'apprentissage en fonction du domaine cible $D_C$ et de l'ensemble cible de tâches $T_C$.

L'étape 140A de génération comprend une sous-étape 140A-1 de réception de données initiales ou issues d'une itération antérieure. De telles données sont spécifiques au domaine cible $D_C$.

Dans un exemple de mise en oeuvre, les données reçues qu'elles soient initiales ou issues d'une itération antérieure, comprennent un ensemble de valeurs prédéterminée de quantités d'énergie électrique à échanger $P_{Net}$ et un ensemble de valeurs initiales possibles de quantité d'énergie électrique $E_{Bcap}$ stockée sur le au moins un organe de stockage d'énergie électrique 19.

Les valeurs de quantités d'énergie électrique à échanger $P_{Net}$ ont, par exemple, été prédéterminées pour chaque pas de temps d'une période temporelle prédéfinie. La période temporelle prédéfinie est, par exemple, d'une année et les pas de temps d'une heure.

Chaque valeur de quantité d'énergie électrique à échanger $P_{Net}$ pour un pas de temps est, par exemple, la différence entre la valeur de l'énergie électrique produite $P_{PV}$ par le au moins un organe de production d'énergie renouvelable 18 pour ledit pas de temps et la valeur d'énergie électrique demandée $P_L$ par le au moins un organe de consommation d'énergie électrique 14 pour ledit pas de temps. On a ainsi :

$$P_{Net}(t) = P_{PV}(t) - P_L(t) \qquad (1)$$

Les valeurs d'énergie électrique produite $P_{PV}$ par le au moins un organe de production d'énergie renouvelable 18 et d'énergie électrique demandée $P_L$ par le au moins un organe de consommation d'énergie électrique 14 ont, par exemple, été prédéterminées pour chaque pas de temps de la période temporelle prédéfinie. De telles valeurs sont, par exemple, issues de mesures effectuées par des capteurs sur des installations existantes ou ont été générées de manière aléatoire au préalable.

Les valeurs initiales possibles de quantité d'énergie électrique initialement stockées $E_{Bcap}$ sur le au moins un organe de stockage d'énergie électrique 19 sont des valeurs prédéfinies. Les valeurs possibles sont, par exemple, 0 kilowattheures (kWh), 5 kWh et 10 kWh.

Dans un même exemple de mise en œuvre, lorsque les données reçues sont issues d'une itération antérieure, les données reçues comprennent au moins l'une des données suivantes :

- l'état suivant $S_{t+1}$ obtenu à l'issue de l'itération précédente,
- une indication indiquant si l'état suivant $S_{t+1}$ obtenu à l'issue de l'itération précédente est un état final,
- le pas de temps courant $\Delta_t$ de l'itération précédente, et
- le modèle optimisé lors de la dernière itération. Un tel modèle comprend des paramètres w qui ont été optimisés lors de la dernière itération.

L'étape 140A de génération comprend une sous-étape 140A-2 d'obtention, à partir des données reçues, d'un modèle courant propre à déterminer une action At de contrôle d'un micro-réseau 10C, parmi un ensemble $E_A$ d'actions prédéfinies, en fonction d'un état St du micro-réseau 10C.

Dans un exemple de mise en œuvre, le modèle courant est le modèle cible initialisé reçu lorsque les données sont des données initiales et est le modèle optimisé lors de la dernière itération sinon.

L'ensemble $E_A$ d'actions prédéfinies est, par exemple, tel que défini précédemment. Les actions At possibles sont notamment fixées par l'ensemble cible de tâches $T_C$.

L'étape 140A de génération comprend une sous-étape 140A-3 de détermination, à partir des données reçues, d'un pas de temps courant $\Delta_t$.

Dans un exemple de mise en œuvre, le pas de temps courant $\Delta_t$ est :

- soit un pas de temps initialisé $\Delta_{t0}$ lorsque les données sont des données initiales ou lorsque l'indicateur indique que l'état suivant $S_{t+1}$ obtenu à l'issue de l'itération précédente est un état final. Le pas de temps initialisé $\Delta_{t0}$ correspond, par exemple, au premier pas de temps de la période temporelle prédéfinie sur laquelle sont définies les valeurs prédéterminées de quantité d'énergie électrique à échanger $P_{Net}$.
- soit le pas de temps précédent $\Delta_{t-1}$ incrémenté d'une unité lorsqu'un tel pas de temps précédent $\Delta_{t-1}$ existe et que l'état suivant $S_{t+1}$ obtenu à l'issue de l'itération précédente n'est pas un état final.

L'étape 140A de génération comprend une sous-étape 140A-4 d'obtention, à partir des données reçues, d'un état courant St d'un micro-réseau 10.

Dans un mode de mise en oeuvre, l'état courant St est soit un état initial $S_0$ lorsque le pas de temps courant $\Delta_t$ est un pas de temps initialisé $\Delta_{t0}$, soit un état suivant $S_{t+1}$ obtenu lors de la dernière itération.

Lorsque l'état courant St est un état initial $S_0$, l'état initial $S_0$ est défini par la valeur prédéterminée de quantité d'énergie électrique à échanger $P_{Net}$ correspondant au pas de temps courant (premier pas de temps $\Delta_{t0}$) et par une valeur de quantité d'énergie électrique stockée $E_{Bcap}$ choisie aléatoirement parmi l'ensemble de valeurs possibles de quantité d'énergie électrique stockée.

L'étape 140A de génération comprend une sous-étape 140A-5 de détermination par le modèle courant d'une action At de contrôle du micro-réseau 10 en fonction de l'état courant St selon une technique d'apprentissage. La technique d'apprentissage est, par exemple, une technique de type Q-Learning ou Double-Q-Learning, telle que la technique « Epsilon greedy ».

L'étape 140A de génération comprend une sous-étape 140A-6 de vérification du respect de contraintes prédéterminées par l'action At déterminée en fonction de l'état courant St.

Dans un mode de mise en oeuvre, les contraintes prédéterminées comprennent au moins une contrainte choisie parmi l'ensemble de contraintes suivantes :

- une première contrainte relative à l'équilibre entre, d'une part, la somme de la quantité d'énergie électrique échangée $P_B$ par le au moins un organe de stockage d'énergie électrique 19, de la quantité d'énergie électrique produite $P_G$ par le au moins un organe de production d'énergie fossile 16 et de la quantité d'énergie électrique consommée $P_C$ par le au moins un organe de consommation d'énergie électrique 14 (en anglais « load curtailment »), et d'autre part, la quantité d'énergie électrique à échanger $P_{Net}$. La première contrainte vise à satisfaire l'équation suivante :

$$P_B(t) + P_G(t) + P_c(t) = P_{Net}(t) \qquad (2)$$

- une deuxième contrainte relative à la quantité d'énergie électrique stockée $E_{Bcap}$ sur le au moins un organe de stockage d'énergie électrique 19. La deuxième contrainte stipule que la quantité d'énergie électrique stockée $E_{Bcap}$ est comprise entre des bornes prédéterminées.
- une troisième contrainte relative à la quantité d'énergie électrique échangée $P_B$ (reçue ou envoyée) par le au moins un organe de stockage d'énergie électrique 19. La troisième contrainte stipule que la quantité d'énergie électrique échangée $P_B$ est comprise entre des bornes prédéterminées.
- une quatrième contrainte relative au mode de fonctionnement de l'au moins un organe de stockage d'énergie électrique 19. La quatrième contrainte vise à satisfaire l'équation suivante :

$$E_{Bcap}(t) = E_{Bcap}(t-1) - P_B(t).\Delta t \qquad (3)$$

- une cinquième contrainte relative à la quantité d'énergie électrique produite $P_G$ par le au moins un organe de production d'énergie fossile 16. La cinquième contrainte stipule que la quantité d'énergie électrique produite $P_G$ est comprise entre des bornes prédéterminées.

L'étape 140A de génération comprend une sous-étape 140A-7 de détermination d'une récompense Rt représentative du coût opérationnel induit suite à l'exécution de l'action At et d'un indicateur indiquant si l'état suivant $S_{t+1}$ obtenu suite à l'exécution de l'action At est un état final.

La récompense Rt est représentative du coût opérationnel induit suite à l'exécution de l'action At.

Dans un mode de mise en oeuvre, la récompense Rt déterminée pour chaque donnée d'apprentissage est égale à la quantité d'énergie électrique à échanger $P_{Net}$ multipliée par un coefficient multiplicatif sélectionné parmi un ensemble de coefficients multiplicatifs m, q, c en fonction de l'action At déterminée. Les coefficients multiplicatifs m, q, c représentent respectivement les coûts opérationnels de l'au moins un organe de stockage d'énergie électrique 19, de l'au moins un organe de production d'énergie fossile 16, et de la réduction de charge (en anglais « load curtailment »).

Par exemple, la récompense Rt est égale à :

- $-m.\,P_{Net}$ si l'action déterminée At est la charge ou la décharge du au moins un organe de stockage d'énergie électrique 19 d'une valeur égale à la quantité d'énergie électrique à échanger $P_{Net}$.
- $-q.\,P_{Net}$ si l'action déterminée At est la production d'une quantité d'énergie électrique par l'organe de stockage d'énergie fossile 16 d'une valeur égale à la quantité d'énergie électrique à échanger $P_{Net}$.
- $-(m.\,P_{NETBat} + q.\,P_{NetGen})$ si l'action déterminée $A_t$ est la décharge de l'au moins un organe de stockage d'énergie électrique 19 d'une quantité d'énergie électrique $P_{NetBat}$ et la production d'une quantité d'énergie électrique $P_{NetGen}$ par l'organe de production d'énergie fossile 16, avec $P_{NETBat} + P_{NetGen} = P_{Net}$.
- $-e.\,P_{Net}$ si export d'énergie électrique vers un réseau de distribution d'énergie électrique.
- $-i.\,P_{Net}$ si import d'énergie électrique d'un réseau de distribution d'énergie électrique.
- $-c.\,P_{Net}$ si les contraintes ne sont pas respectées.
- 0 si l'action déterminée At est de ne pas faire d'action.

Dans un exemple de mise en oeuvre, la récompense Rt est calculée en fonction d'une fonction de coût que l'on cherche à minimiser. Le but est d'obtenir un modèle entraîné minimisant les coûts opérationnels du micro-réseau cible 10C tout en respectant des contraintes prédéterminées sur la période temporelle T. Dans un exemple, les coûts induits par le au moins un organe de production d'énergie renouvelable 18 ne sont pas pris en compte dans la fonction de coût et il est supposé un coût fixe pour le au moins un organe de production d'énergie fossile 16 et le au moins un organe de stockage d'énergie électrique 19. Dans cet exemple, la fonction objective est, ainsi, la somme des coûts cumulés pour faire fonctionner le au moins un organe de production d'énergie fossile 16 et le au moins un organe de stockage d'énergie électrique 19 sur la période temporelle T avec un pas de temps fixé (1 heure par exemple). Pour simplifier, il est par exemple supposé que la puissance électrique au temps t est la puissance durant l'intervalle [t, t+$\Delta$t]. La fonction de coût est alors formulée de la manière suivante :

$$J_{obj} = \sum_{t=0}^{T}|P_B(t)|.\,m + |P_G(t)|.\,q + |P_C(t)|.\,c \qquad (4)$$

Où :

- m, q et c représentent respectivement les coûts opérationnels induits par le l'au moins un organe de stockage d'énergie électrique 19, le au moins un organe de production d'énergie fossile 16, et la réduction de la puissance de l'au moins un organe de consommation d'énergie électrique 14 (en anglais « load curtailment »).

- $P_B(t)$ est la quantité d'énergie électrique échangée par le au moins un organe de stockage d'énergie électrique 19 (charge ou décharge).
- $P_G(t)$ est la quantité d'énergie électrique produite par le au moins un organe de production d'énergie fossile 16.
- $P_C(t)$ est la réduction de la quantité d'énergie électrique demandée par le au moins un organe de consommation d'énergie électrique 14.

Dans un exemple de mise en oeuvre, l'indicateur indiquant si l'état suivant $S_{t+1}$ obtenu suite à l'exécution de l'action At est un état final est déterminé en fonction du pas de temps courant $\Delta_t$ et de la vérification effectuée à l'étape précédente. Ainsi, l'état final est, par exemple, atteint :

- lorsque le pas de temps courant $\Delta_t$ est égal à un pas de temps prédéterminé (par exemple, le dernier pas de temps des valeurs prédéterminées de quantités d'énergie électrique à échanger $P_{Net}$ et lorsque les contraintes sont vérifiées, et
- lorsque les contraintes ne sont pas vérifiées (échec impliquant le retour à un état initial).

Lorsque le pas de temps courant $\Delta_t$ n'est pas égal au pas de temps prédéterminé et lorsque les contraintes sont vérifiées, l'état suivant $S_{t+1}$ obtenu n'est pas un état final.

Il est ensuite mémorisé dans la mémoire de reprise $M_R$, une donnée d'apprentissage comprenant au moins l'état courant St, l'état suivant $S_{t+1}$, l'action déterminée At et la récompense Rt, et avantageusement une variable booléenne indiquant si l'état suivant obtenu est un état final ou non.

L'étape 140A de génération comprend la répétition des sous-étapes précédentes (140A-1 à 140A-7 de l'étape de génération 140A) tant que l'indicateur indique que l'état suivant obtenu $S_{t+1}$ est différent d'un état final. L'ensemble des données d'apprentissage mémorisées jusqu'à l'obtention d'un état final forment un jeu d'apprentissage.

Une fois l'état final obtenu, l'étape d'entraînement 140B est enclenchée.

L'étape d'entraînement 140B est une phase d'entraînement du modèle courant au cours de laquelle au moins un paramètre w du modèle courant est optimisé sur la base d'au moins un jeu d'apprentissage mémorisé dans la mémoire de reprise $M_R$ pour obtenir un modèle optimisé. La technique d'entraînement utilisé est, par exemple, basé sur un algorithme de type apprentissage profond (en anglais « deep learning »).

Dans un mode de mise en oeuvre, seuls les paramètres w non figés du modèle courant sont optimisés lors de l'étape d'entraînement 140B.

Avantageusement, le au moins un paramètre w du modèle est optimisé sur la base de plusieurs jeux d'apprentissage mémorisés dans la mémoire de reprise $M_R$.

Le procédé de contrôle comprend ensuite la répétition des étapes de génération 140A et d'entraînement 140B jusqu'à la satisfaction d'un critère de convergence, le modèle optimisé lors de la dernière itération étant un modèle entraîné pour le contrôle d'un micro-réseau électrique cible 10C, aussi appelé modèle de contrôle.

Par exemple, le critère de convergence est atteint lorsque pendant un nombre prédéterminé d'itérations successives à chaque obtention d'un état final, le pas de temps courant $\Delta_t$ ayant permis l'obtention de l'état final correspond à un pas de temps prédéterminé (par exemple, le dernier pas de temps des valeurs prédéterminées de quantités d'énergie électrique à échanger $P_{Net}$), et la somme des récompenses Rt obtenues pour chaque donnée d'apprentissage du jeu d'apprentissage correspondant est supérieure ou égale à un seuil prédéterminé. Ainsi, lors de l'atteinte du critère de convergence, il est considéré que la fonction de coût est minimisée.

Le procédé de contrôle comprend une phase 150 d'exploitation du modèle de contrôle comprenant la détermination d'une action At de contrôle du micro-réseau cible 10C suite à la réception, par le modèle de contrôle, de l'état courant St du micro-réseau 10 cible.

L'homme du métier comprendra que le modèle de contrôle a de manière classique d'abord été validé sur des données de test différentes des données du jeu d'apprentissage, avant d'être utilisé pour le contrôle effectif d'un micro-réseau cible 10C. La validation consiste par exemple à la mise en oeuvre de l'étape de génération 140A avec des données d'entrée différentes.

Le procédé de contrôle comprend une phase 160 de réalisation de l'action At déterminée par l'envoi de commandes aux organes du micro-réseau cible 10C. Les commandes sont, par exemple, des commandes de connexion ou déconnexion des organes du micro-réseau cible 10C du réseau de transport d'énergie électrique 12 et/ou des commandes de charge, de décharge ou de production d'énergie électrique. En fonction des cas, une action At peut également être l'absence de commandes (correspondant à l'action ne rien faire).

Ainsi, le modèle de contrôle obtenu suite à la mise en oeuvre du présent procédé permet de minimiser les coûts opérationnels du micro-réseau. Un tel modèle s'affranchit également d'un module de prévision. Il est donc aisément adaptable à tous types de micro-réseau.

Un tel modèle de contrôle est, en outre, obtenu de manière plus rapide puisque des données issues de l'apprentissage d'un autre modèle sont réexploitées. Le présent procédé offre ainsi la possibilité de capitaliser sur des apprentissages effectués par d'autres modèles pour des micro-réseaux ayant des environnements et/ou modes de fonctionnement différents.

Le présent procédé est, ainsi, tout à fait adapté pour être implémenté dans un grand nombre de micro-réseaux puisque le temps d'obtention d'un modèle optimisé est significativement réduit.

L'homme du métier comprendra que les modes de réalisation et variantes précédemment décrits peuvent être combinés pour former de nouveaux modes de réalisation pourvu qu'ils soient compatibles techniquement.

**Revendications**

1. Procédé de contrôle d'au moins un micro-réseau électrique (10), chaque micro-réseau électrique (10) comprenant au moins un organe de consommation d'énergie électrique (14), au moins un organe de production d'énergie électrique (16, 18) et au moins un organe de stockage d'énergie électrique (19), chaque micro-réseau (10) étant propre à prendre une pluralité d'états énergétiques (St), chaque état énergétique (St) étant défini par une quantité d'énergie électrique à échanger ($P_{Net}$) entre des organes du micro-réseau (10) et par une quantité d'énergie électrique stockée ($E_{Bcap}$) sur le au moins un organe de stockage d'énergie électrique (19), chaque micro-réseau (10) étant propre à passer d'un état (St) à un autre par la mise en œuvre d'une action (At) sur le micro-réseau (10) parmi un ensemble ($E_A$) d'actions prédéfinies, **caractérisé en ce que** le procédé comprenant les phase de :

   a. fourniture d'un modèle, dit modèle source ($M_S$), entraîné sur un domaine source ($D_S$) pour apprendre un ensemble source de tâches ($T_S$), de sorte que le modèle source ($M_S$) est propre à déterminer une action (At), parmi l'ensemble ($E_A$) d'actions prédéfinies, de contrôle d'un micro-réseau donné, dit micro-réseau source (10S), en fonction de l'état (St) du micro-réseau source (10S), le micro-réseau source (10S) étant propre à fonctionner dans un environnement donné, dit environnement source ($E_S$), délimitant le domaine source ($D_S$), le micro-réseau source (10S) étant propre à fonctionner selon un mode de fonctionnement donné, dit mode de fonctionnement source ($F_S$), délimitant l'ensemble source de tâches ($T_S$), le modèle source ($M_S$) comprenant des paramètres (w) dont les valeurs sont optimisées pour le domaine source ($D_S$) et l'ensemble source de tâches ($T_S$),

   b. fourniture d'un modèle, dit modèle cible ($M_C$), propre à être entraîné sur un domaine cible ($D_C$) pour apprendre un ensemble cible de tâches ($T_C$), de sorte que le modèle cible ($M_C$) soit propre à déterminer une action (At), parmi l'ensemble ($E_A$) d'actions prédéfinies, de contrôle d'un micro-réseau donné, dit micro-réseau cible (10C), en fonction de l'état (St) du micro-réseau cible (10C), le micro-réseau cible (10C) étant propre à fonctionner dans un environnement donné, dit environnement cible ($E_C$), délimitant le domaine cible ($D_C$), le micro-réseau cible (10C) étant propre à fonctionner selon un mode de fonctionnement donné, dit mode de fonctionnement cible ($F_C$), délimitant l'ensemble cible de tâches ($T_C$), l'environnement cible ($E_C$) et le mode de fonctionnement cible ($F_C$) étant tels que le domaine cible ($D_C$) est différent du domaine source ($D_S$) et/ou que l'ensemble cible de tâches ($T_C$) est différent de l'ensemble source de tâches ($T_S$), le modèle cible ($M_C$) comprenant des paramètres (w),

   c. extraction de valeurs de paramètres (w) du modèle source ($M_S$), la phase d'extraction étant mise en œuvre par ordinateur,

   d. initialisation de paramètres (w) du modèle cible ($M_C$) avec les valeurs de paramètres (w) extraites du modèle source ($M_S$) pour obtenir un modèle cible ($M_C$) initialisé, la phase d'initialisation étant mise en œuvre par ordinateur, et

   e. optimisation, en fonction du domaine cible ($D_C$) et de l'ensemble cible de tâches ($T_C$), des paramètres (w) du modèle cible ($M_C$) initialisé pour obtenir un modèle cible ($M_C$) entraîné pour le contrôle du micro-réseau cible (10C), la phase d'optimisation étant mise en œuvre par ordinateur.

2. Procédé selon la revendication 1, dans lequel au moins une valeur de paramètres (w) du modèle cible ($M_C$) qui a été initialisée avec les valeurs extraites est figée lors de l'étape d'optimisation.

3. Procédé selon la revendication 1 ou 2, dans lequel chaque modèle est un réseau de neurones comprenant une couche de neurones d'entrée ($C_E$), une couche de neurones de sortie ($C_S$) et des couches intermédiaires ($C_{int}$) de neurones, les paramètres (w) de chaque modèle définissant les poids synaptiques (P) entre les neurones de couches consécutives, les valeurs de paramètres (w), extraites du modèle source ($M_S$), correspondant au moins aux poids synaptiques (P) entre les neurones de la couche d'entrée ($C_E$) et les neurones de la couche intermédiaire ($C_{int}$) consécutive à la couche d'entrée ($C_E$), dite première couche intermédiaire, et, de préférence, en outre, les poids synaptiques (P) entre les neurones de plusieurs couches intermédiaires de neurones, consécutives à la première couche intermédiaire de neurones.

**4.** Procédé selon l'une quelconque des revendications 1 à 3, dans lequel la phase d'optimisation comprend :

   a. une étape de génération de jeux de données d'apprentissage en fonction du domaine cible ($D_C$) et de l'ensemble cible de tâches ($T_C$),
   b. une étape d'entraînement du modèle cible ($M_C$) au cours de laquelle au moins un paramètre (w) du modèle cible ($M_C$) est optimisé sur la base d'au moins un jeu d'apprentissage généré pour obtenir un modèle cible ($M_C$) optimisé, et
   c. la répétition des étapes de génération et d'entraînement jusqu'à la satisfaction d'un critère de convergence, le modèle cible ($M_C$) optimisé lors de la dernière itération étant un modèle cible ($M_C$) entraîné pour le contrôle du micro-réseau cible (10C).

**5.** Procédé selon l'une quelconque des revendications 1 à 4, dans lequel le procédé comprend :

   a. une phase d'exploitation du modèle cible ($M_C$) entraîné comprenant la détermination d'une action (At) de contrôle du micro-réseau cible (10C) suite à la réception, par le modèle cible ($M_C$) entraîné, de l'état courant (St) du micro-réseau cible (10C), et
   b. une phase de réalisation de l'action (At) déterminée par l'envoi de commandes aux organes du micro-réseau cible (10C).

**6.** Procédé selon l'une quelconque des revendications 1 à 5, dans lequel les modes de fonctionnement prédéfinis comprennent au moins les modes de fonctionnement suivants :

   a. un mode de fonctionnement, dit isolé, dans lequel le micro-réseau est déconnecté du réseau de distribution d'énergie électrique,
   b. un mode de fonctionnement, dit connecté, dans lequel le micro-réseau est connecté à un réseau de distribution d'énergie électrique, et
   c. un mode de fonctionnement, dit intermédiaire, dans lequel le micro-réseau est connecté à un réseau de distribution d'énergie électrique ou isolé du réseau de distribution d'énergie électrique en fonction du pas de temps considéré.

**7.** Procédé selon l'une quelconque des revendications 1 à 6, dans lequel chaque micro-réseau (10) comprend au moins un organe de production d'énergie renouvelable (18) et au moins un organe de production d'énergie fossile (16), la quantité d'énergie électrique à échanger ($P_{Net}$) étant la différence entre la quantité d'énergie électrique produite ($P_{PV}$) par le au moins un organe de production d'énergie renouvelable (18) et la quantité d'énergie électrique demandée ($P_C$) par le au moins un organe de consommation d'énergie électrique (14), la quantité d'énergie électrique à échanger ($P_{Net}$) étant une quantité d'énergie électrique à échanger entre les organes du micro-réseau (10) à l'exception de l'au moins un organe de production d'énergie renouvelable (18).

**8.** Procédé selon l'une quelconque des revendications 1 à 7, dans lequel pour deux micro-réseaux fonctionnant dans des environnements distincts,

   a. la distribution de la quantité d'énergie électrique produite ($P_{PV}$) par le au moins un organe de production d'énergie renouvelable (18) de l'un des micro-réseaux (10) sur une période prédéterminée est différente de la distribution de la quantité d'énergie électrique produite ($P_{PV}$) par le au moins un organe de production d'énergie renouvelable (18) de l'autre micro-réseau (10) sur la période prédéterminée, et/ou
   b. la distribution de la quantité d'énergie électrique demandée ($P_C$) par le au moins un organe de consommation d'énergie électrique (14) de l'un des micro-réseaux (10) sur une période prédéterminée est différente de la distribution de la quantité d'énergie électrique demandée ($P_C$) par le au moins un organe de consommation d'énergie électrique (14) de l'autre micro-réseau (10) sur la période prédéterminée.

**9.** Procédé selon l'une quelconque des revendications 1 à 8, dans lequel l'ensemble ($E_A$) d'actions prédéfinies comprend au moins une action suivante :

   h. la décharge de l'au moins un organe de stockage d'énergie électrique (19) d'une valeur correspondant à la quantité d'énergie électrique à échanger ($P_{Net}$), ou lorsque la quantité d'énergie électrique stockée ($E_{Bcap}$) sur le au moins un organe de stockage d'énergie électrique (19) est insuffisante par rapport à la quantité d'énergie électrique à échanger ($P_{Net}$), la décharge intégrale de l'au moins un organe de stockage d'énergie électrique (19) et la fourniture de la quantité d'énergie électrique restante par le au moins un organe de production d'énergie électrique (16),

i. la charge de l'au moins un organe de stockage d'énergie électrique (19) d'une valeur correspondant à la quantité d'énergie électrique à échanger ($P_{Net}$),

j. la production d'une quantité d'énergie électrique correspondant à la quantité d'énergie électrique à échanger ($P_{Net}$) par le au moins un organe de production d'énergie électrique (16),

k. l'importation d'énergie électrique en provenance d'un réseau de distribution d'énergie électrique pour fournir au moins une partie de la quantité d'énergie électrique à échanger ($P_{Net}$),

l. l'exportation d'au moins une partie de la quantité d'énergie électrique à échanger ($P_{Net}$) vers un réseau de distribution d'énergie électrique,

m. l'importation de la quantité d'énergie électrique à échanger ($P_{Net}$) d'un réseau de distribution d'énergie électrique et d'une quantité d'énergie électrique pour charger l'organe de stockage d'énergie électrique, et

n. ne pas faire d'action.

10. Produit programme d'ordinateur comportant un support lisible d'informations, sur lequel est mémorisé un programme d'ordinateur comprenant des instructions de programme, le programme d'ordinateur étant chargeable sur une unité de traitement de données et entraînant la mise en œuvre d'un procédé selon l'une quelconque des revendications 1 à 9 lorsque le programme d'ordinateur est mis en œuvre sur l'unité de traitement des données.


**Patentansprüche**

1. Verfahren zur Steuerung mindestens eines elektrischen Mikronetzwerks (10), wobei jedes elektrische Mikronetzwerk (10) mindestens ein Organ zum Verbrauch elektrischer Energie (14), mindestens ein Organ zur Erzeugung von elektrischer Energie (16, 18) und mindestens ein Organ zum Speichern elektrischer Energie (19) umfasst, wobei jedes Mikronetzwerk (10) dazu geeignet ist, eine Vielzahl von energetischen Zuständen (St) anzunehmen, wobei jeder energetische Zustand ($S_t$) durch eine zwischen Organen des Mikronetzwerks (10) auszutauschende Menge an elektrischer Energie ($P_{Net}$) und durch eine auf dem mindestens einen Organ zum Speichern elektrischer Energie (19) gespeicherte Menge an elektrischer Energie ($E_{Bcap}$) definiert ist, wobei jedes Mikronetzwerk (10) dazu geeignet ist, durch Ausführen einer Aktion ($A_t$) aus einer Gesamtheit ($E_A$) vordefinierter Aktionen in dem Mikronetzwerk (10) von einem Zustand (St) in einen anderen überzugehen, **dadurch gekennzeichnet, dass** das Verfahren die folgenden Phasen umfasst:

a. Bereitstellung eines Modells, dem sogenannten Quellmodell (Ms), das auf einer Quelldomäne ($D_S$) trainiert wurde, um eine Quellgesamtheit von Aufgaben ($T_S$) zu erlernen, sodass das Quellmodell ($M_S$) dazu geeignet ist, aus der Gesamtheit ($E_A$) vordefinierter Aktionen eine Aktion ($A_t$) zur Steuerung eines gegebenen Mikronetzwerks, dem sogenannten Quellmikronetzwerk (10S), in Abhängigkeit vom Zustand ($S_t$) des Quellmikronetzwerks (10S) zu bestimmen, wobei das Quellmikronetzwerk (10S) dazu geeignet ist, in einer gegebenen Umgebung, der sogenannten Quellumgebung ($E_S$), zu funktionieren, welche die Quelldomäne ($D_S$) abgrenzt, wobei das Quellmikronetzwerk (10S) dazu geeignet ist, nach einem gegebenen Funktionsmodus, dem sogenannten Quellfunktionsmodus ($F_S$), zu funktionieren, der die Quellgesamtheit von Aufgaben ($T_S$) abgrenzt, wobei das Quellmodell ($M_S$) Parameter (w) umfasst, deren Werte für die Quelldomäne ($D_S$) und die Quellgesamtheit von Aufgaben ($T_S$) optimiert sind,

b. Bereitstellung eines Modells, dem sogenannten Zielmodell ($M_C$), das dazu geeignet ist, in einer Zieldomäne ($D_C$) trainiert zu werden, um eine Zielgesamtheit von Aufgaben ($T_C$) zu erlernen, sodass das Zielmodell ($M_C$) dazu geeignet ist, aus der Gesamtheit ($E_A$) vordefinierter Aktionen eine Aktion (At) zur Steuerung eines gegebenen Mikronetzwerks, dem sogenannten Zielmikronetzwerk (10C), in Abhängigkeit vom Zustand (St) des Zielmikronetzwerks (10C) zu bestimmen, wobei das Zielmikronetzwerk (10C) dazu geeignet ist, in einer gegebenen Umgebung, der sogenannten Zielumgebung ($E_C$), zu funktionieren, welche die Zieldomäne ($D_C$) abgrenzt, wobei das Zielmikronetzwerk (10C) dazu geeignet ist, nach einem gegebenen Funktionsmodus, dem sogenannten Zielfunktionsmodus ($F_C$), zu funktionieren, der die Zielgesamtheit von Aufgaben ($T_C$) abgrenzt, wobei die Zielumgebung ($E_C$) und der Zielfunktionsmodus ($F_C$) so beschaffen sind, dass die Zieldomäne ($D_C$) sich von der Quelldomäne ($D_S$) unterscheidet und/oder die Zielgesamtheit von Aufgaben ($T_C$) sich von der Quellgesamtheit von Aufgaben ($T_S$) unterscheidet, wobei das Zielmodell ($M_C$) Parameter (w) umfasst,

c. Extraktion von Werten von Parametern (w) des Quellmodells ($M_S$), wobei die Extraktionsphase durch einen Computer ausgeführt wird,

d. Initialisierung von Parametern (w) des Zielmodells ($M_C$) mit den aus dem Quellmodell ($M_S$) extrahierten Werten der Parameter (w), um ein initialisiertes Zielmodell ($M_C$) zu erhalten, wobei die Initialisierungsphase durch einen Computer ausgeführt wird, und

e. Optimierung der Parameter (w) des initialisierten Zielmodells ($M_C$) in Abhängigkeit von der Zieldomäne ($D_C$) und der Zielgesamtheit von Aufgaben ($T_C$), um ein für die Steuerung des Zielmikronetzwerks (10C) trainiertes Zielmodell ($M_C$) zu erhalten, wobei die Optimierungsphase durch einen Computer ausgeführt wird.

2.  Verfahren nach Anspruch 1, bei dem mindestens ein Wert von Parametern (w) des Zielmodells ($M_C$), das mit den extrahierten Werten initialisiert wurde, während der Stufe der Optimierung eingefroren ist.

3.  Verfahren nach Anspruch 1 oder 2, bei dem jedes Modell ein Netzwerk von Neuronen ist, das eine Schicht von Eingangsneuronen ($C_E$), eine Schicht von Ausgangsneuronen ($C_S$) und Zwischenschichten ($C_{int}$) von Neuronen umfasst, wobei die Parameter (w) jedes Modells die synaptischen Gewichte (P) zwischen den Neuronen aufeinanderfolgender Schichten definieren, wobei die Werte der Parameter (w), die aus dem Quellmodell ($M_S$) extrahiert werden, mindestens den synaptischen Gewichten (P) zwischen den Neuronen der Eingangsschicht ($C_E$) und den Neuronen der auf die Eingangsschicht ($C_E$) folgenden Zwischenschicht ($C_{int}$), der sogenannten ersten Zwischenschicht, und vorzugsweise ferner den synaptischen Gewichten (P) zwischen den Neuronen mehrerer Zwischenschichten von Neuronen, die auf die erste Zwischenschicht von Neuronen folgen, entsprechen.

4.  Verfahren nach einem beliebigen der Ansprüche 1 bis 3, bei dem die Optimierungsphase Folgendes umfasst:

    a. eine Stufe der Lerndatensatzgenerierung in Abhängigkeit von der Zieldomäne ($D_C$) und der Zielgesamtheit von Aufgaben ($T_C$),
    b. eine Stufe des Trainings des Zielmodells ($M_C$), im Laufe derer mindestens ein Parameter (w) des Zielmodells ($M_C$) auf der Grundlage mindestens eines generierten Lernsatzes optimiert wird, um ein optimiertes Zielmodell ($M_C$) zu erhalten, und
    c. die Wiederholung der Stufen der Generierung und des Trainings bis zur Erfüllung eines Konvergenzkriteriums, wobei das in der letzten Iteration optimierte Zielmodell ($M_C$) ein für die Steuerung des Zielmikronetzwerks (10C) trainiertes Zielmodell ($M_C$) ist.

5.  Verfahren nach einem beliebigen der Ansprüche 1 bis 4, bei dem das Verfahren Folgendes umfasst:

    a. eine Betriebsphase des trainierten Zielmodells ($M_C$), welche die Bestimmung einer Aktion (At) zur Steuerung des Zielmikronetzwerks (10C) nach dem Empfang des aktuellen Zustands (St) des Zielmikronetzwerks (10C) durch das trainierte Zielmodell ($M_C$) umfasst, und
    b. eine Durchführungsphase der Aktion (At), die durch die Sendung von Befehlen an die Organe des Zielmikronetzwerks (10C) bestimmt wird.

6.  Verfahren nach einem beliebigen der Ansprüche 1 bis 5, bei dem die vordefinierten Funktionsmodi mindestens die folgenden Funktionsmodi umfassen:

    a. einen sogenannten isolierten Funktionsmodus, bei dem das Mikronetzwerk nicht mit dem Verteilungsnetzwerk für elektrische Energie verbunden ist,
    b. einen sogenannten verbundenen Funktionsmodus, bei dem das Mikronetzwerk mit einem Verteilungsnetzwerk für elektrische Energie verbunden ist, und
    c. einen sogenannten Zwischenfunktionsmodus, bei dem das Mikronetzwerk in Abhängigkeit von dem betrachteten Zeitschritt mit einem Verteilungsnetzwerk für elektrische Energie verbunden ist oder vom Verteilungsnetzwerk für elektrische Energie isoliert ist.

7.  Verfahren nach einem beliebigen der Ansprüche 1 bis 6, bei dem jedes Mikronetzwerk (10) mindestens ein Organ zur Erzeugung erneuerbarer Energie (18) und mindestens ein Organ zur Erzeugung fossiler Energie (16) umfasst, wobei die auszutauschende Menge an elektrischer Energie ($P_{Net}$) die Differenz zwischen der von dem mindestens einen Organ zur Erzeugung erneuerbarer Energie (18) erzeugten Menge an elektrischer Energie ($P_{PV}$) und der von dem mindestens einen Organ zum Verbrauch elektrischer Energie (14) angeforderten Menge an elektrischer Energie ($P_C$) ist, wobei die auszutauschende Menge an elektrischer Energie ($P_{Net}$) eine zwischen den Organen des Mikronetzwerks (10) mit Ausnahme des mindestens einen Organs zur Erzeugung erneuerbarer Energie (18) auszutauschende Menge an elektrischer Energie ist.

8.  Verfahren nach einem beliebigen der Ansprüche 1 bis 7, bei dem für zwei in unterschiedlichen Umgebungen funktionierende Mikronetzwerke

a. die Verteilung der von dem mindestens einen Organ zur Erzeugung erneuerbarer Energie (18) erzeugten Menge an elektrischer Energie ($P_{PV}$) eines der Mikronetzwerke (10) über einen vorbestimmten Zeitraum sich von der Verteilung der von dem mindestens einen Organ zur Erzeugung erneuerbarer Energie (18) des anderen Mikronetzwerks (10) über den vorbestimmten Zeitraum erzeugten Menge an elektrischer Energie ($P_{PV}$) unterscheidet, und/oder

b. die Verteilung der Menge an elektrischer Energie ($P_C$), die von dem mindestens einen Organ zum Verbrauch elektrischer Energie (14) eines der Mikronetzwerke (10) über einen vorbestimmten Zeitraum angefordert wird, sich von der Verteilung der Menge an elektrischer Energie ($P_C$), die von dem mindestens einen Organ zum Verbrauch elektrischer Energie (14) des anderen Mikronetzwerks (10) über den vorbestimmten Zeitraum angefordert wird, unterscheidet.

9. Verfahren nach einem beliebigen der Ansprüche 1 bis 8, bei dem die Gesamtheit ($E_A$) von vordefinierten Aktionen mindestens eine der folgenden Aktionen umfasst:

h. die Entladung des mindestens einen Organs zur Speicherung elektrischer Energie (19) um einen Wert, welcher der auszutauschenden Menge an elektrischer Energie ($P_{Net}$) entspricht, oder, wenn die in dem mindestens einen Organ zur Speicherung elektrischer Energie (19) gespeicherte Menge an elektrischer Energie ($E_{Bcap}$) im Verhältnis zur auszutauschenden Menge an elektrischer Energie ($P_{Net}$) unzureichend ist, die vollständige Entladung des mindestens einen Organs zur Speicherung elektrischer Energie (19) und die Bereitstellung der verbleibenden Menge an elektrischer Energie durch das mindestens eine Organ zur Erzeugung elektrischer Energie (16),

i. die Aufladung des mindestens einen Organs zur Speicherung elektrischer Energie (19) auf einen Wert, welcher der Menge der auszutauschenden elektrischen Energie ($P_{Net}$) entspricht,

j. die Erzeugung einer der auszutauschenden Menge an elektrischer Energie ($P_{Net}$) entsprechenden Menge an elektrischer Energie durch das mindestens eine Organ zur Erzeugung elektrischer Energie (16),

k. den Import von elektrischer Energie aus einem Netzwerk zur Verteilung elektrischer Energie, um mindestens einen Teil der auszutauschenden Menge an elektrischer Energie ($P_{Net}$) bereitzustellen,

l. den Export mindestens eines Teils der auszutauschenden Menge an elektrischer Energie ($P_{Net}$) in ein Netzwerk zur Verteilung elektrischer Energie,

m. den Import der auszutauschenden Menge elektrischer Energie ($P_{Net}$) aus einem Netzwerk zur Verteilung elektrischer Energie und einer Menge an elektrischer Energie zum Aufladen des Organs zur Speicherung elektrischer Energie, und

n. keine Aktion vorzunehmen.

10. Computerprogrammerzeugnis, das einen lesbaren Informationsträger enthält, in dem ein Computerprogramm mit Programmanweisungen gespeichert ist, wobei das Computerprogramm auf eine Datenverarbeitungseinheit geladen werden kann und die Ausführung eines Verfahrens nach einem beliebigen der Ansprüche 1 bis 9 nach sich zieht, wenn das Computerprogramm auf der Datenverarbeitungseinheit ausgeführt wird.

**Claims**

1. A control method for at least one electrical micro-network (10), each electrical micro-network (10) comprising at least one electrical energy consuming element (14), at least one electrical energy production element (16, 18) and at least one electrical energy storage element (19), each micro-network (10) being suitable for taking a plurality of energy states ($S_t$), each energy state (St) being defined by a quantity of electrical energy to exchange ($P_{Net}$) between the elements of the micro-network (10) and by a quantity of electrical energy stored ($E_{Bcap}$) on the at least one electrical energy storage element (19), each micro-network (10) being suitable for changing from one state (St) to another by performing an action (At) on the micro-network (10) amongst a series ($E_A$) of predefined actions, **characterized in that** the method comprises the phases of:

a. the provision of a model, called source model ($M_S$), trained in a source domain ($D_S$) for learning a source series of tasks ($T_S$), in order that the source model ($M_S$) is suitable for determining an action (At), amongst a series ($E_A$) of predefined actions, of control of a given micro-network, called source micro-network (10S), depending on the state (St) of the source micro-network (10S), the source micro-network (10S) being suitable for operating in a given environment, called source environment ($E_S$), delimiting the source domain ($D_S$), the source micro-network (10S) being suitable for operating according to a given operating mode, called source operating mode ($F_S$), delimiting the source series of tasks ($T_S$), the source model ($M_S$) comprising the parameters (w) the values of which are optimized for the source domain ($D_S$) and the source series of tasks ($T_S$),

b. the provision of a model, called target model ($M_C$), suitable for being trained in a target domain ($D_C$) for learning a target series of tasks ($T_C$), in order that the target model ($M_C$) is suitable for determining an action (At), amongst a series ($E_A$) of predefined actions, of control of a given micro-network, called target micro-network (10C), depending on the state (St) of the target micro-network (10C), the target micro-network (10C) being suitable for operating in a given environment, called target environment ($E_C$), delimiting the target domain ($D_C$), the target micro-network (10C) being suitable for operating according to a given operating mode, called target operating mode ($F_C$), delimiting the target series of tasks ($T_C$), the target environment ($E_C$) and the target operating mode ($F_C$) being such that the target domain ($D_C$) is different from the source domain ($D_S$) and/or that the target series of tasks ($T_C$) is different from the source series of tasks ($T_S$), the target model ($M_C$) comprising the parameters (w),

c. extraction of the values of the parameters (w) of the source model ($M_S$), the extraction phase being implemented by computer,

d. initialization of the parameters (w) of the target model ($M_C$) with the values of the parameters (w) extracted from the source model ($M_S$) to obtain an initialized target model ($M_C$), the initialization phase being implemented by computer, and

e. optimization, depending on the target domain ($D_C$) and the target series of tasks ($T_C$) of the parameters (w) of the target model ($M_C$) initialized to obtain a target model ($M_C$) trained for the control of a target micro-network (10C), the optimization phase being implemented by computer.

2. The method according to claim 1, in which at least one value of the parameter (w) of the target model ($M_C$) that was initialized with the values extracted, is frozen during the optimization step.

3. The method according to claim 1 or 2, in which each model is a neural network comprising a layer of input neurons ($C_E$), a layer of output neurons (Cs) and an intermediate layer ($C_{int}$) of neurons, the parameters (w) of each model defining the synaptic weights (P) between the neurons of the consecutive layers, the values of the parameters (w), extracted from the source model ($M_S$), corresponding at least to the synaptic weights (P) between the neuron of the input layer ($C_E$) and the neurons of the intermediate layer ($C_{int}$) consecutive to the input layer ($C_E$), said first intermediate layer and preferably moreover, the synaptic weights (P) between the neuron of a plurality of intermediate layers of neurons, consecutive to the first intermediate layer of neurons.

4. The method according to any one of claims 1 to 3, wherein the optimization phase comprises:

a. a step of generating sets of learning data depending on the target domain ($D_C$) and the target series of tasks ($T_C$),

b. a learning step of the target model ($M_C$) during which at least one parameter (w) of the target model ($M_C$) is optimized on the basis of at least one learning set generated for obtaining an optimized target model ($M_C$), and

c. the repetition of the generating and training steps until meeting a convergence criterion, the target model ($M_C$) optimized during the last iteration being a target model ($M_C$) trained for controlling the target micro-network (10C).

5. The method according to any one of claims 1 to 4, wherein the method comprises:

a. a phase of operating the trained target model ($M_C$) comprising the determination of an action (At) of controlling the target micro-network (10C) following the reception, by the trained target model ($M_C$), of the current state (St) of the target micro-network (10C), and

b. a phase of carrying out the determined action (At) by sending the commands to the target micro-network (10C).

6. The method according to any one of claims 1 to 5, wherein the predefined operating modes comprise at least the following operating modes:

a. a so-called isolated operating mode in which the micro-network is disconnected from the electrical energy distribution network,

b. a so-called connected operating mode in which the micro-network is connected to the electrical energy distribution network, and

c. a so-called intermediate operating mode in which the micro-network is connected to the electrical energy distribution network or isolated from the electrical energy distribution network depending on the time step considered.

7. The method according to any one of claims 1 to 6, wherein each micro-network (10) comprises at least one renewable energy production element (18) and at least one fossil energy production element (16), the quantity of electrical energy to exchange ($P_{Net}$) being the difference between the quantity of electrical energy produced ($P_{PV}$) by the at least one renewable energy production element (18) and the quantity of energy demanded ($P_C$) by the at least one electrical energy consuming element (14), the quantity of electrical energy to exchange ($P_{Net}$) being a quantity of electrical energy to exchange between elements of the micro-network (10) with the exception of at least one renewable energy production element (18).

8. The method according to any one of claims 1 to 7, wherein for two micro-networks operating in distinct environments,

a. the distribution of the quantity of electrical energy produced ($P_{PV}$) by the at least one renewable energy production element (18) from one of the micro-networks (10) over a predetermined period is different from the distribution of the quantity of electrical energy produced ($P_{PV}$) by the at least one renewable energy production element (18) from the other micro-network (10) over the predetermined period, and/or
b. the distribution of the quantity of electrical energy demanded ($P_C$) by the at least one electrical energy consuming element (14) from one of the micro-networks (10) over a predetermined period is different from the distribution of the quantity of electrical energy demanded ($P_C$) by the at least one electrical energy consuming element (14) from the other micro-network (10) over the predetermined period.

9. The method according to any one of claims 1 to 8, wherein the series ($E_A$) of predefined actions comprises at least one of the following actions:

h. the discharge of at least one electrical energy storage element (19) of a value corresponding to the quantity of electrical energy to exchange ($P_{Net}$), or when the quantity of electrical energy stored ($E_{Bcap}$) in the at least one electrical energy storage element (19) is insufficient relative to the quantity of electrical energy to exchange ($P_{Net}$), the complete discharge of at least one electrical energy storage element (19) and the provision of the quantity of electrical energy remaining by the at least one electrical energy production element (16),
i. the charging of the at least one electrical energy storage element (19) of a value corresponding to the quantity of electrical energy to exchange ($P_{Net}$),
j. the production of a quantity of electrical energy corresponding to the quantity of electrical energy to exchange ($P_{Net}$) by the at least one electrical energy production element (16),
k. the importing of electrical energy coming from an electrical energy distribution network for providing at least a part of the quantity of electrical energy to exchange ($P_{Net}$),
l. the exporting of at least a part of the quantity of electrical energy to exchange ($P_{Net}$) to an electrical energy distribution network,
m. the importing of the quantity of electrical energy to exchange ($P_{Net}$) from an electrical energy distribution network and a quantity of electrical energy to charge the electrical energy storage element, and
n. not to do the action.

10. A computer program product including a readable information medium on which a computer program is stored comprising program instructions, the computer program being able to be loaded on a data processing unit and training the operation of a method according to any one of claims 1 to 9 when the computer program is implemented on the data processing unit.

FIG.1

## FIG.2

FIG.3

$$\underline{\text{FIG.4}}$$

FIG.5

EP 4 268 342 B1

E

$S_t$

$M_C$

$A_t$

$(S_t, A_t, S_{t+1}, R_t)$

$M_R$

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2017194814 A

- CN 112117760 A

**Littérature non-brevet citée dans la description**

- **M. RAWA et al.** An Efficient Scheme for Determining the Power Loss in Wind-PV Based on Deep Learning. *IEEE Access*, 2021, vol. 9, 9481-9492